# EUROPEAN PATENT APPLICATION

(11) **EP 4 227 053 A1**
(43) Date of publication of application: **16.08.2023**
(21) Application number: 21897243.8
(22) Date of filing: 11.11.2021
(51) Int. Cl.: B28B 11/06, B41M 5/00, B28B 11/00, B28B 11/04

(54) **METHOD FOR PRODUCING RAISED PATTERNS ON CERAMIC TILES AND CERAMIC TILES WITH RAISED PATTERNS MANUFACTURED ACCORDING TO THE METHOD**

(30) Priority: 27.11.2020 ES 202031191
(71) Applicant: Torrecid, S.A., 12110 Alcora (Castellón) (ES)
(72) Inventor: RUIZ VEGA, Óscar, 12110 Alcora (Castellón) (ES)
(74) Representative: Carlos Hernando, Borja
(86) International application number: PCT/ES2021/070811
(87) International publication number: WO 2022/112630

(57) **Abstract**

The present invention describes a ceramic tile with raised patterns and a method for producing raised patterns on a ceramic tile that comprises printing one ink followed by printing a second ink characterised by being insoluble in the previous ink, so as to form a raised pattern with a height of 50 micrometres to 500 micrometres. Finally, the ceramic tile is fired at a maximum temperature of 850 °C to 1300 °C.

## Description

The present invention relates to a ceramic tile with raised patterns and a method for producing raised patterns on ceramic tiles subjected to a firing cycle at a maximum temperature of 850 °C to 1300 °C.

### STATE OF THE ART

Currently, the generation of raised patterns on ceramic tiles is done by means of pressing. In this sense, an example is patent application ES2257963A1 which describes a manufacturing process of a ceramic tile that comprises a dry pressing phase, consisting of placing two plates or punches, one lower and one upper, inside a metal matrix. Thus, one of them, normally the lower one, contains the negative drawing of the raised pattern to be generated on the surface of the ceramic tile. The other plate contains the drawing of the rib, through which the tile is attached to any surface that acts as a support, such as on a wall or on the floor, to which it remains adhered by means of the collaboration of a grip material, suitable adhesive or by means of attachment systems.

Likewise, patent ES2136538B1 describes a method for loading material and obtaining ceramic parts by means of pressing. The way to achieve the raised pattern is based on pressing by means of supplying material that is fed through the same matrix of the mould, first placing the lower punch or mould at a certain height, and then the upper mould or punch at another height such that the space or volume defined between the sides of the matrix and the two punches or moulds, is such that when pressing, the part is obtained with the desired thickness and transferring to the ceramic tile the raised pattern provided in one of the moulds or punches.

However, this pressing method to obtain raised patterns on ceramic tiles has the limitation that all ceramic tiles have the same raised pattern, the one provided by the mould or punch, without any possibility of customising the raised pattern, i.e., that each part has a raised pattern design different from the others. In this sense, the only possibility would consist in generating as many different moulds as different parts to be had. Obviously, it constitutes an economically unfeasible solution since it involves steel moulds with a cost that is only offset when it is used to press thousands of square metres. The consequence of all this is a limitation in terms of the aesthetic possibilities of the parts, especially when seeking to imitate natural surfaces such as natural stone, marble or wood.

### GENERAL DESCRIPTION OF THE INVENTION

Throughout the description and the claims, the word "comprises" and its variants are not intended to exclude other technical features, additions, components or steps. In addition, the word "comprises" includes the case "consists of". For those skilled in the art, other objects, advantages and features of the invention will be deduced from both the description and the practical use of the invention.

In the field of the ceramic industry, as in other sectors, there is a trend towards the massive customisation of products. This translates into the need to adjust products to customer demand and into a complete flexibility in terms of production. In this sense, the present invention solves the current limitations previously described in terms of customisation and variation of raised pattern on ceramic tiles in an industrial and competitive manner.

Thus, the present invention consists of a method for producing raised patterns on a ceramic tile that comprises the following steps:
1. Supplying a ceramic tile.
2. Printing a first ink on the ceramic tile by means of an inkjet technology printing station, with a predefined design and a grammage of 10 g/m² to 100 g/m².
3. Printing a second ink by means of a printing station, with a predefined design and a grammage of 10 g/m² to 1000 g/m², characterised by being insoluble in the previous ink, so as to form a raised pattern with a height of 50 micrometres to 500 micrometres.
4. Placing the ceramic tile in a firing kiln and firing at a maximum temperature of 850 °C to 1300 °C, resulting in a fired ceramic tile with raised pattern,
and in a ceramic tile with raised pattern made according to the method described in the present invention.

The fact of printing two inks characterised by being insoluble with one another, together with the possibility of printing a predefined design with at least one of the two inks, makes it possible to generate a customised raised pattern the geometry or final pattern of which will depend on the predefined designs printed with the two inks. The fact that at least one of the two inks is printed following a predefined pattern implies that the first ink and/or the second ink partially cover the surface of the ceramic tile. By applying the method according to the invention and depending on the grammage of each ink deposited, a different raised pattern thickness is achieved, of 50 micrometres to 500 micrometres. In this way, a range of aesthetic possibilities opens up, since it is possible to create different raised pattern heights in each area within the same ceramic tile. All this translates into the possibility of ceramic tiles with unlimited possibilities with regard to types of customised raised patterns, including the imitation of natural stone, wood and marble raised patterns, among others.

According to the present invention, the first ink is printed with an inkjet printing station and the second ink is printed with a subsequent printing station. The printing technique used in the second ink printing station may be inkjet or other. Examples of printing techniques in the ceramic tile sector that are alternatives to inkjet, by way of example but not limitation, are airbrushing, roller, veil, screen and bell printing. In the event that the printing technique used in the first and second ink is inkjet, the possibility is contemplated that the printing of both inks is carried out with the same printing station. This is possible because inkjet equipment usually comprises two or more printing bars arranged in parallel, wherein each bar corresponds to a line of printheads with which a type of ink is injected. Therefore, if an inkjet printing unit with at least two bars is available, it is possible to print the first ink and the second ink with only said equipment.

The inkjet printing station provides drops onto the ceramic tile having a fixed or variable volume and the volume of which is preferably of 8 to 200 picolitres.

With all this, a preferred embodiment of the present invention contemplates a method for producing raised patterns on a ceramic tile that comprises printing the first ink by means of an inkjet technology printing station and printing the second ink, characterised by being insoluble in the previous ink, by means of an airbrush printing station.

Another preferred embodiment of the present invention consists of a method for producing raised patterns on a ceramic tile that comprises printing the first ink by means of an inkjet technology printing station and printing the second ink, characterised by being insoluble in the previous ink, by means of an inkjet technology printing station.

Given that aesthetic properties are one of the most important aspects of ceramic tiles, the present invention also includes a preferred embodiment wherein, prior to printing the ink, at least one ceramic glaze with a predefined design is printed on the entire surface of the ceramic tile or a part of same. In this way, the raised pattern generated by the combination of the two inks insoluble with one another is obtained on a previously glazed surface. This glazed surface can provide one or several aesthetic effects depending on whether one or several different glazes are applied, as well as acting as a barrier or intermediate layer between the support and the subsequent layers. Examples of these aesthetic effects that are achieved with these glazes, by way of example, but not limitation, are transparent gloss, opaque gloss, matte, satin matte, opaque, lustre, metallic, among others. To print these glazes, the printing station can use any of the usual printing technologies in the ceramic tile sector such as inkjet, airbrushing, roller, veil, screen or bell printing, among others.

Another option to add aesthetic value to the ceramic tile is by decorating the ceramic tile with at least one inkthat provides chromatic effects (cyan, cobalt blue, brown, red, magenta, yellow, green, black, white, grey, etc.) or ceramic effects (transparent gloss, opaque gloss, matte, satin matte, opaque, metallic, lustre, etc.). In this sense, the present invention contemplates a preferred embodiment to produce raised patterns on a ceramic tile wherein, after the step of printing the second ink and before placing it in the firing kiln, the ceramic tile is subjected to drying in a drying station at a temperature of 45 °C to 250 °C. Next, a decoration is printed with at least one ink that provides chromatic or ceramic effects, by means of an inkjet technology printing station, so that said decoration is deposited exactly on the first ink and/or on the second ink. All of this makes it possible to generate chromatic and ceramic effects on the raised pattern or outside the raised pattern, obtaining ceramic tiles with greater aesthetic richness. It should be noted that an alternative to the drying station, according to the present invention, is to carry out the drying at room temperature, delaying the entry of the part to the printing station. To do this, the part can be stored for a certain time, the speed of the production line reduced or the distance between the printing station for the second ink and the printing station intended for decoration extended.

The inkjet printing station provides drops onto the ceramic tile having a fixed or variable volume and the volume of which is preferably of 8 to 200 picolitres.

The present invention also contemplates the possibility of generating textures and increasing the height of the raised pattern by applying grit particles. The term grit, as used in the present invention, relates to a frit that has been subjected to grinding and sieving to adjust it to a certain range of particle diameter. According to the present invention, a preferred form consists of a method for producing raised patterns on a ceramic tile wherein, after the step of supplying the ceramic tile and before the step of printing the ink with the printing station, printing is carried out of an ink having adhesive properties with a predefined design using an inkjet, airbrush, roller or screen printing station and a grammage of 30 g/m² to 150 g/m². Next, grit particles are deposited by means of a powder deposition station with a predefined design and a grammage of 100 g/m² to 700 g/m² so that, when the grit particles are deposited on the ink having adhesive properties, they are attached to the ceramic tile. The grit particles are characterised by having a diameter of 75 microns to 300 microns. In this way, it is possible to provide the ceramic tile with additional raised pattern as well as a surface with the aesthetic effects provided by the grits. Within this preferred form of embodiment, there is also the option that the printing of the ink having adhesive properties and the deposition of the grit particles are carried out with a dry digital decoration equipment. This type of equipment provides the printing station and digital powder deposition systems simultaneously.

The printing station, when it is inkjet, provides drops onto the ceramic tile having a fixed or variable volume and the volume of which is preferably of 8 to 200 picolitres.

This invention also envisions the option that the ceramic tile that is supplied at the start of the manufacturing method provides a pre-raised pattern design. In this way, at the end of the manufacturing process, the resulting ceramic tile has the initial raised pattern together with the raised pattern generated according to the present invention.

As previously indicated, once the raised pattern has been generated, it is necessary to fire the ceramic tile so that said raised pattern fully adheres to the ceramic tile and develops the desired aesthetic effects. In this sense, the present invention contemplates that the firing kiln be a natural gas firing kiln commonly used in the ceramic tile sector. It should also be noted that, according to the present invention, the selection of the maximum temperature, of 850 °C to 1300 °C, will depend on the type of inks and glazes that are deposited on the ceramic tile. Finally, it should be noted that the method for producing ceramic tile raised patterns according to the present invention does not limit the inclusion or incorporation of other processes or steps that provide other aesthetic properties or additional functionalities to those protected in this invention, both before and after firing.

### DESCRIPTION OF THE FIGURES

Figure 1 schematically represents the method for producing raised patterns on a ceramic tile according to the invention.
Figure 2 schematically represents the method for producing raised patterns on a ceramic tile in which a printing station for printing at least one ceramic glaze according to the invention is additionally included.
Figure 3 schematically represents the method for producing raised patterns on a ceramic tile in which a drying station and a printing station for printing a decoration are additionally included, according to the invention.
Figure 4 schematically represents the method for producing raised patterns on a ceramic tile, which additionally includes a printing station for printing an ink having adhesive properties and a powder deposition station for deposition of grit particles, according to the invention.
Figure 5 schematically represents the ceramic tile with raised pattern once fired according to the preferred embodiment of the invention.
Figure 6 schematically represents the ceramic tile according to a first variant of the invention.
Figure 7 schematically represents the ceramic tile with raised pattern once fired according to a second variant of the invention.
Figure 8a schematically represents the ceramic tile with raised pattern before it is fired according to a third variant of the invention.
Figure 8b schematically represents the ceramic tile with raised pattern once fired according to a fourth variant of the invention.

### PREFERRED EMBODIMENTS

With the aim of better understanding the features of the invention, some of the preferred embodiments are described below, as non-limiting examples, with reference to the accompanying figures. In this regard, the following figures are provided for illustrative purposes, and are not intended to be limiting of the present invention. Furthermore, the present invention covers all possible combinations of particular and preferred embodiments indicated herein.

The present invention consists of a method for producing raised patterns on a ceramic tile that comprises the following steps:
1. Supplying a ceramic tile (2).
2. Printing a first ink (3) on the ceramic tile (2) by means of an inkjet technology printing station (4), with a predefined design and a grammage of 10 g/m² to 100 g/m².
3. Printing a second ink (5) by means of a printing station (6), with a predefined design and a grammage of 10 g/m² to 1000 g/m², characterised by being insoluble in the previous ink (3), so as to form a raised pattern with a height of 50 micrometres to 500 micrometres.
4. Placing the ceramic tile in a firing kiln (7) and fire at a maximum temperature of 850 °C to 1300 °C, resulting in a fired ceramic tile with raised pattern (2a),
and in a ceramic tile with raised pattern (2a) made according to the method described in the present invention.

The fact of printing two inks characterised by being insoluble with one another, together with the possibility of printing a predefined design with at least one of the two inks, makes it possible to generate a customised raised pattern the geometry or final pattern of which will depend on the predefined designs printed with the two inks. The fact that at least one of the two inks is printed following a predefined design implies that the first ink (3) and/or the second ink (5) partially cover the surface of the ceramic tile (2), with a different raised pattern thickness, of 50 micrometres to 500 micrometres.

The first ink (3) is printed with an inkjet printing station (4) and the second ink (5) is printed with a subsequent printing station (6). The printing technique used in the printing station (6) of the second ink can be inkjet or another selected from airbrushing, roller, veil, screen or bell printing, and others. In the event that the printing technique used in the first and second ink is inkjet, the possibility is contemplated (not shown in the figures) that the printing of both inks is carried out with the same printing station, printing the first ink (3) and second ink (5) with only said equipment.

The inkjet printing station (4) provides drops onto the ceramic tile (2) having a fixed or variable volume and the volume of which is preferably of 8 to 200 picolitres.

A preferred embodiment of the present invention contemplates a method for producing raised patterns on a ceramic tile (2) that comprises printing the first ink (3) by means of an inkjet technology printing station (4) and printing the second ink (5), characterised by being insoluble in the previous ink (3), by means of an airbrushing printing station (6).

Another preferred form of the present invention consists of a method for producing raised patterns on a ceramic tile (2) comprising printing the first ink (3) by means of an inkjet technology printing station (4) and printing the second ink (5), characterised by being insoluble in the previous ink (3), by means of an inkjet technology printing station (6).

Given that aesthetic properties are one of the most important aspects of ceramic tiles, the present invention also includes a preferred embodiment wherein, prior to printing the ink (3), at least one ceramic glaze (8) with a predefined design is printed on the entire surface of the ceramic tile (2) or a part of same. In this way, the raised pattern generated by the combination of the two inks insoluble with one another is obtained on a previously glazed surface.

Another option to add aesthetic value to the ceramic tile (2) is by decorating the ceramic tile with at least one ink that provides chromatic or ceramic effects. In this sense, the present invention contemplates a preferred embodiment to produce raised patterns on a ceramic tile wherein, after the step of printing the second ink (6) and before placing it in the firing kiln (7), the ceramic tile is subjected to drying in a drying station (10) at a temperature of 45 °C to 250 °C. Next, a decoration (11) is printed with at least one ink that provides chromatic or ceramic effects, by means of an inkjet technology printing station (12), so that said decoration is deposited exactly on the first ink (3) and/or on the second ink (5). It should be noted that an alternative to the drying station, according to the present invention, is to carry out the drying at room temperature, delaying the entry of the part to the printing station (11). To do this, the part can be stored for a certain time, the speed of the production line reduced or the distance between the printing station for the second ink (6) and the printing station intended for decoration (12) extended.

The inkjet printing station (12) provides drops onto the ceramic tile (2) having a fixed or variable volume and the volume of which is preferably of 8 to 200 picolitres.

The present invention also contemplates the possibility of generating textures and increasing the height of the raised pattern by applying grit particles. According to the present invention, a preferred form consists of a method for producing raised patterns on a ceramic tile (2) wherein, after the step of supplying the ceramic tile and before the step of printing the ink (3) with the printing station (4), printing is carried out of an ink having adhesive properties (13) with a predefined design using an inkjet, airbrushing, roller or screen printing station (14) and a grammage of 30 g/m² to 150 g/m². Next, grit particles (15) are deposited by means of a powder deposition station (16) with a predefined design and a grammage of 100 g/m² to 700 g/m² so that, when the grit particles are deposited on the ink having adhesive properties, they are attached to the ceramic tile. The grit particles are characterised by having a diameter of 75 microns to 300 microns. Within this preferred form of embodiment, there is also the option that the printing of the ink having adhesive properties (13) and the deposition of the grit particles (15) are carried out with a dry digital decoration equipment.

The printing station (14), when it is inkjet, provides drops onto the ceramic tile (2) having a fixed or variable volume and the volume of which is preferably of 8 to 200 picolitres.

As previously indicated, once the raised pattern has been generated, the ceramic tile (2) must be fired so that said raised pattern fully adheres to the ceramic tile and develops the desired aesthetic effects. In this sense, the present invention contemplates that the firing kiln (7) is a natural gas firing kiln commonly used in the ceramic tile sector. It should also be noted that, according to the present invention, the selection of the maximum temperature, of 850 °C to 1300 °C, will depend on the type of inks and glazes that are deposited on the ceramic tile.

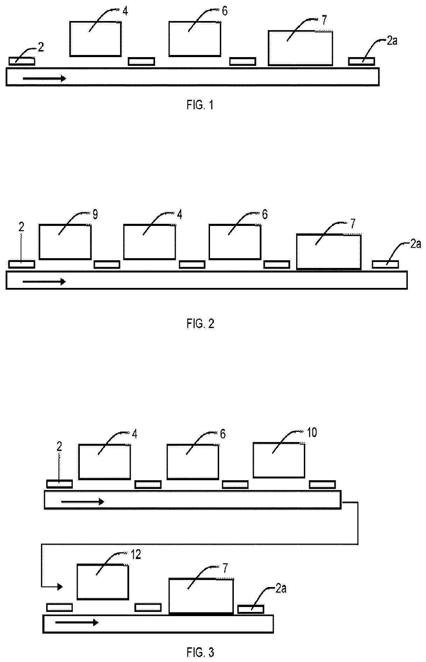

Figure 1 schematically represents the method for producing raised patterns on a ceramic tile 2 according to the invention. Thus, the method follows the direction indicated by the arrow, i.e., from left to right, beginning with the supply of the ceramic tile 2. Next, said ceramic tile 2 goes to the printing station 4 where the ink 3 is printed, with a predefined design and a grammage of 10 g/m² to 100 g/m². Next, the ceramic tile 2 goes to the printing station 6 where the ink 5 is printed, with a predefined design and a grammage of 10 g/m² to 1000 g/m², characterised by being insoluble in the previous ink 3, so as to form a raised pattern with a height of 50 microns to 500 microns. The method ends with the entry of the ceramic tile into a firing kiln 7 where it is subjected to firing at a maximum temperature of 850 °C to 1300 °C. Once firing is complete, a fired ceramic tile 2a with at least one raised pattern resulting from the method according to the invention is obtained.

Figure 2 schematically represents the method for producing raised patterns on a ceramic tile 2 wherein a printing station for printing at least one ceramic glaze according to the invention is additionally included. Thus, the method follows the direction indicated by the arrow, i.e., from left to right, beginning with the supply of the ceramic tile 2. Then said ceramic tile goes to the printing station 9 where at least one glaze 8 is printed with a predefined design and a grammage of 30 g/m² to 1000 g/m². Subsequently, the ceramic tile goes to the printing station 4 where the ink 3 is printed with a predefined design and a grammage of 10 g/m² to 100 g/m². Next, the ceramic tile goes to the printing station 6 where the ink 5 is printed, with a predefined design and a grammage of 10 g/m² to 1000 g/m², characterised by being insoluble in the previous ink 3, so as to form a raised pattern with a height of 50 micrometres to 500 micrometres. The method ends with the entry of the ceramic tile into a firing kiln 7 where it is subjected to firing at a maximum temperature of 850 °C to 1300 °C. Once firing is complete, a fired ceramic tile 2a with at least one raised pattern resulting from the method according to the invention is obtained.

Figure 3 schematically represents the method for producing raised patterns on a ceramic tile 2 wherein a drying station and a printing station for printing a decoration are additionally included, according to the invention. Thus, the method follows the direction indicated by the arrow, i.e., from left to right, beginning with the supply of the ceramic tile 2. Next, said ceramic tile goes to the printing station 4 where the ink 3 is printed, with a predefined design and a grammage of 10 g/m² to 100 g/m². Next, the ceramic tile goes to the printing station 6 where the ink 5 is printed, with a predefined design and a grammage of 10 g/m² to 1000 g/m², characterised by being insoluble in the previous ink 3, so as to form a raised pattern with a height of 50 micrometres to 500 micrometres. Subsequently, the ceramic tile enters a drying station 10 to eliminate water and solvents present in the inks. Next, the ceramic tile enters the inkjet technology printing station 12 where a decoration is printed with at least one ink that provides chromatic or ceramic effects, so that said decoration is deposited exactly on the ink 3 and/or the ink 5. The method ends with the entry of the ceramic tile into a firing kiln 7 where it is subjected to firing at a maximum temperature of 850 °C to 1300 °C. Once firing is complete, a fired ceramic tile 2a with at least one raised pattern resulting from the method according to the invention is obtained.

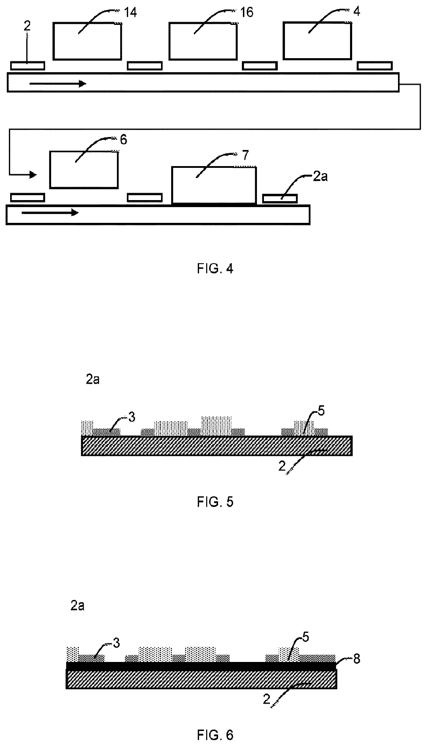

Figure 4 schematically represents the method for producing raised patterns on a ceramic tile 2, wherein a printing station for printing an ink having adhesive properties and a powder deposition station for deposition of grit particles are additionally included, according to the invention. Thus, the method follows the direction indicated by the arrow, i.e., from left to right, beginning with the supply of the ceramic tile 2. Said ceramic tile enters the printing station 14 where an ink having adhesive properties is printed, with a predefined design and a grammage of 30 g/m² to 150 g/m². Next, the ceramic tile enters the powder depositing station 16 where grit particles are deposited with a predefined design and a grammage of 100 g/m² to 700 g/m². Next, the ceramic tile goes to the printing station 4 where the ink 3 is printed with a predefined design and a grammage of 10 g/m² to 100 g/m². Next, the ceramic tile goes to the printing station 6 where the ink 5 is printed, with a predefined design and a grammage of 10 g/m² to 1000 g/m², characterised by being insoluble in the previous ink 3, so as to form a raised pattern with a height of 50 micrometres to 500 micrometres. The method ends with the entry of the ceramic tile into a firing kiln 7 where it is subjected to firing at a maximum temperature of 850 °C to 1300 °C. Once firing is complete, a fired ceramic tile 2a with at least one raised pattern resulting from the method according to the invention is obtained.

Figure 5 schematically represents the ceramic tile with a raised pattern once fired 2a, which shows a raised pattern design resulting from printing the ink 3 and the ink 5 on the ceramic tile 2, according to the invention.

Figure 6 schematically represents the ceramic tile with raised pattern once fired 2a, which shows a glaze design 8 printed on the ceramic tile 2, followed by a raised pattern design resulting from printing the ink 3 and the ink 5 on at least one glaze 8, according to the invention.

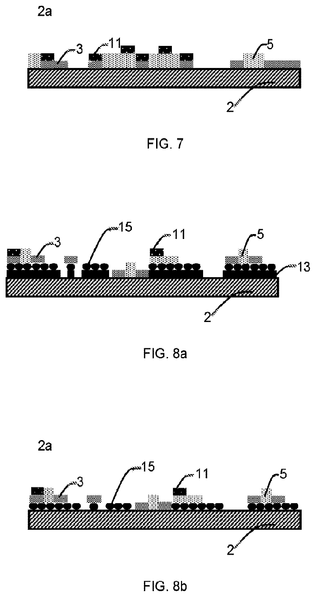

Figure 7 schematically represents the ceramic tile with raised pattern once fired 2a, which shows a raised pattern design resulting from printing the ink 3 and the ink 5 on the ceramic tile 2 and printing a decoration with at least one ink that provides chromatic or ceramic effects 11 and which is deposited exactly on the ink 3 and/or the ink 5, according to the invention.

Figure 8a schematically represents the ceramic tile with a raised pattern before being fired, which shows a printing design of an ink having adhesive properties 13 on which grit particles 15 are deposited, followed by a raised pattern design resulting from printing the ink 3 and the ink 5 and, finally, the printing of a decoration with at least one ink that provides chromatic or ceramic effects 11 that is deposited exactly on the ink 3 and/or the ink 5, according to the invention.

Figure 8b schematically represents the ceramic tile with a raised pattern once fired 2a, which shows a deposition of grit particles 15, followed by a raised pattern design resulting from printing the ink 3 and the ink 5 and, finally, printing a decoration with at least one ink that provides chromatic or ceramic effects 11 that is deposited exactly on the ink 3 and/or the ink 5, according to the invention.

## Claims

1. A method for producing raised patterns on a ceramic tile that comprises the following steps:
a. Supplying a ceramic tile (2).
b. Printing a first ink (3) on the ceramic tile (2) by means of an inkjet technology printing station (4), with a predefined design and a grammage of 10 g/m²to 100 g/m².
c. Printing a second ink (5) by means of a printing station (6), with a predefined design and a grammage of 10 g/m² to 1000 g/m², **characterised by** being insoluble in the previous ink (3), so as to form a raised pattern with a height of 50 micrometres to 500 micrometres.
d. Placing the ceramic tile in a firing kiln (7) and fire at a maximum temperature of 850 °C to 1300 °C, resulting in a fired ceramic tile with raised pattern (2a).

2. The method for producing raised patterns on a ceramic tile (2) according to the preceding claim wherein the second ink (5) is printed by inkjet, airbrushing, roller, veil, screen or bell printing.

3. The method for producing raised patterns on a ceramic tile (2) according to any one of the preceding claims wherein, prior to printing the first ink (3), at least one ceramic glaze (8) with a predefined design is printed, using a printing station (9) by means of inkjet, airbrushing, roller, veil, screen or bell printing and a grammage of 30 g/m² to 1000 g/m².

4. The method for producing raised patterns on a ceramic tile (2) according to any one of the preceding claims, wherein, after the step of printing the second ink (5) with the printing station (6) and before placing it in the firing kiln (7), the following additional steps are performed:
a. Placing the ceramic tile (2) in a drying station (10) at a temperature of 45 °C to 250 °C.
b. Printing a decoration (11) with at least one ink that provides chromatic or ceramic effects, by means of an inkjet technology printing station (12) with a predefined design, so that the decoration (11) is deposited exactly on the first ink (3) and/or on the second ink (5).

5. The method for producing raised patterns on a ceramic tile (2) according to any one of the preceding claims, wherein, after the step of supplying the ceramic tile and before the step of printing the ink (3) with the printing station (4), the following additional steps are performed:
a. Printing an ink having adhesive properties (13) by means of a printing station (14) using inkjet, airbrush, roller or screen printing, with a predefined design and a grammage of 30 g/m²to 150 g/m².
b. Depositing grit particles (15) by means of a powder deposition station (16), with a predefined design and a grammage of 100 g/m² to 700 g/m², wherein the grit particles have a diameter of 75 microns to 300 microns.

6. The method for producing raised patterns on a ceramic tile (2) according to any one of the preceding claims wherein the printing of the ink having adhesive properties (13) and the deposition of the grit particles (15) is carried out by means of a dry digital decoration equipment.

7. The method for producing raised patterns on a ceramic tile (2) according to any one of the preceding claims, wherein the ceramic tile (2) provides a pre-raised pattern design.

8. The method for producing raised patterns on a ceramic tile (2) according to claim 1 wherein the first ink (3) and the second ink (5) are printed with the same inkjet printing station (4).

9. The method for producing raised patterns on a ceramic tile (2) according to any one of the preceding claims, wherein the inkjet printing stations (4, 12, 14) provide drops onto the ceramic tile (2) having a fixed or variable volume and the volume of which is, preferably, of 8 to 200 picolitres.

10. The method for producing raised patterns on a ceramic tile (2) according to any one of the preceding claims, wherein the firing kiln (7) is a natural gas firing kiln commonly used in the ceramic sector.

11. The method for producing raised patterns on a ceramic tile (2) according to any one of the preceding claims, wherein the drying station can be replaced by drying at room temperature, delaying the entry of the ceramic tile to the printing station (11).

12. A ceramic tile with raised patterns (2a) manufactured according to the method described in any one of the preceding claims.
